# EUROPÄISCHE PATENTANMELDUNG

(11) **EP 1 041 093 A2**
(43) Veröffentlichungstag der Anmeldung: **04.10.2000**
(21) Anmeldenummer: 00106179.5
(22) Anmeldetag: 21.03.2000
(51) Int. Cl.: C08F 220/12

(54) **Polyalkylmethacrylat-Plastisole mit verbesserten Fliesseigenschaften**

(30) Priorität: 30.03.1999 DE 19914605
(71) Anmelder: Röhm GmbH, 64293 Darmstadt (DE)
(72) Erfinder: Schultes, Klaus, Dr., 65189 Wiesbaden (DE); Schmitt, Günther, Dr., 64291 Darmstadt (DE); Olschewski, Andreas, 63814 Mainaschaff (DE); Mager, Theodor, 64295 Darmstadt (DE)

(57) **Zusammenfassung**

Durch Einbau einer hydrophilen Verbindung in ein PAMA-Copolymer werden PAMA-Plastisole mit verringerter Viskosität und erhöhter Topfzeit erhalten.

## Beschreibung

### Gebiet der Erfindung

Die Erfindung betrifft Polyalkylmethacrylat-Plastisole (PAMA-Plastisole) mit verbesserten Fließeigenschaften durch Einbau von hydrophilen Monomeren.

### Stand der Technik

Plastisole, d. h. zweiphasige Systeme bestehend aus Kunststoff- oder Kunstharzteilchen und einem geeigneten Weichmacher oder einer geeigneten Weichmachermischung sind theoretisch aus den verschiedensten Kunststoffen herstellbar, die technisch wichtigsten Anwendungen blieben aber bisher auf wenige Polymersysteme beschränkt. Copolymerisate aus Polyvinylchlorid und weiteren, vinylisch ungesättigten Monomeren sind bekannt und finden weite Anwendung. Nachteilig ist ihr Gehalt an Chlor, der unter bestimmten Bedingungen korrodierend wirken kann. Diese Plastisole sind auch unter den Bezeichnungen PVC-Plasten, Plastisole, Organosole oder Plastigele bekannt. (vgl. auch Ullmann's Encyclopedia of Industrial Chemistry, 5th Ed. Vol. A21, Seiten 734 - 737, VCH 1992; Becker-Braun, Kunststoff-Handbuch, 2. Auflage, Bd. 2/2, Seiten 1077-1090, C. Hanser 1986; H. F. Mark et al. Ed. Encyclopedia of Polymer Science & Engineering, 2nd. Ed. Suppiem. Vol. Seiten 568 - 643, Wiley-Interscience 1989 und Saechtling, Kunststoff Taschenbuch, Carl Hanser Verlag, München, 26. Ausgabe,(1995) Seiten 406 ff.).

Copolymerisate auf der Basis von Methylmethacrylat und Butylmethacrylat, sogenannte PAMA-Plastisole, werden mit großem Erfolg für Plastisole im Autobereich eingesetzt. Die Plastisole werden als Klebeplastisole, Dichtungsmassen, Schweißpasten und Unterbodenschutzmassen sowie als Fußbodenbeläge eingesetzt. Aber auch Plastisole auf Acrylatbasis stehen der Praxis schon seit einiger Zeit zur Verfügung (vgl. DE-PS 934 498, FR-A 2,291,248). Der letztgenannte Stand der Technik baut auf der Erkenntnis auf, daß es zur Herstellung technisch akzeptabler PAMA-Plastisole der Abstimmung von Glastemperatur Tg, Teilchengröße und Zusammensetzung der Polymerpartikel einerseits und speziellen Weichmachern andererseits bedarf.

US-PS 4,371,677 (Goodrich) beschreibt ein Herstellungsverfahren für ein Copolymerisat aus PVC und Acrylat, bei dem das Acrylat kontinuierlich während der Polymerisation zugefügt wird. Die Viskosität der aus dem PVC-Copolymerisat erhältlichen Plastisolpaste wird erniedrigt.

Aus den Schriften JP 04059849, 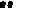 Vernetzung über eine Chelatbildung" mit Hilfe eines zusätzlichen Harzes (JP 50105725; Melaminharz; JP 63137832, niedermolekulares funktionelles PVC-Harz), mit Hilfe von Isocyanaten (JP 07164576, JP 56016533, JP 50077471, JP 59033344)" ist bekannt, hydroxylgruppenhaltige Monomere mit Vinylchlorid zu polymerisieren. Man erreicht so eine Vernetzung des Plastisols. PVC-freie Plastisole mit hydroxylgruppenhaltigen Monomeren werden in EP 557944, JP-OS 07/1 57622, GB 2278116, WO 9426813, EP 624606, DE 3900933 und JP 8182838 beschrieben.

Zweck des Einbaus von hydroxylgruppenhaltigen Monomeren ist die Vernetzung des ausgehärteten Plastisols durch Veresterung.

JP-OS 07/102147 beschreibt die Einstellung eines Löslichkeitsparameters.

### Aufgabe

Es bestand die Aufgabe, ein geeignetes Copolymer-Pulver für PAMA-Plastisole zu entwickeln, welches die Viskosität des PAMA-Plastisols deutlich reduziert Gleichzeitig sollte die Lagerstabilität der erhaltenen Pasten verbessert werden.

### Vorteile der Erfindung

Die Reduzierung der Viskosität ermöglicht es, bei vergleichbarem Polymergehalt der Plastisol-Paste mehr Zusatzstoffe, wie beispielsweise Pigmente, Füllstoffe und sonstige Hilfsmittel, einzumischen, bevor die Grenze der Verarbeitbarkeit des fertig konfektionierten Plastisols beim Anwender erreicht wird.

Dem Anwender wird also durch die erfindungsgemäße Zusammensetzung in die Lage versetzt, umfangreicher und damit länger als mit den Plastisol-Pasten des Standes der Technik zu arbeiten, bevor die zunehmende Viskosität der entstehenden Plastisol-Fertigmischung ihm anwendungstechnische Grenzen setzt.

Dieses Verhalten der erfindungsgemäßen Zusammensetzung war nicht zu erwarten, da die hydroxylgruppenhaltigen Verbindungen im Stand der Technik als Vernetzungsstellen wirken.

### Lösung der Aufgabe

Es wurde nun gefunden, daß der Zusatz von hydrophilen Verbindungen eine überraschende Verbesserung der Pastenrheologie bewirkt. Als hydrophile Verbindung wird eine Verbindung der allg. Formel III eingesetzt. 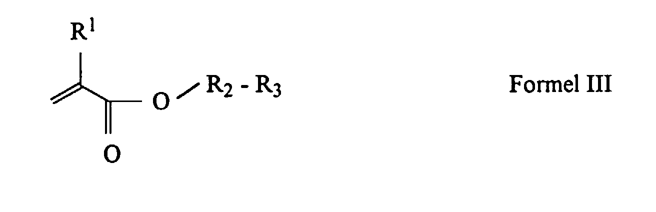
- R₁: = CH₃, H
- R₂: = -CH₂-; -(CH₂)-ₙ
n = 2, 3 oder 4,
wobei die Alkylgruppe auch verzweigt sein kann, wie beispielsweise Iso-Propyl oder Iso-Butyl
- R₃: = OH, NH₂, -N( R₄)₂
- R₄: = H, CH₃, CH₂ - CH₃

Die Lösung der Aufgabe erfolgt durch ein Copolymer mit folgender Zusammensetzung:
a) 0 - 90 Gew.-% eines Acrylsäurealkylesters mit mindestens 3 Kohlenstoffatomen in dem Alkylrest und/oder eines Methacrylsäurealkylesters mit mindestens 2 Kohlenstoffatomen im Alkylrest und/oder Styrol. und
b) 10 - 99 Gew.-% Methylacrylat oder Methylmethacrylat oder Ethylacrylat oder Ethylmethacrylat.
c) 1- 20 Gew.-% einer hydrophilen Verbindung der Formel III 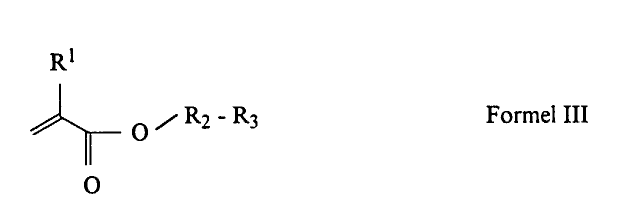
   - R₁: = CH₃, H
   - R₂: = -CH₂-; -(CH₂)-ₙ
   n = 2, 3 oder 4,
   wobei die Alkylgruppe auch verzweigt sein kann, wie beispielsweise Iso-Propyl oder Iso-Butyl
   - R₃: = OH, NH₂, -N( R₄)₂
   - R₄: = H, CH₃, CH₂ - CH₃
   wobei R³ z. B. folgende Formel aufweisen kann:

   R³ = -CH₂-; -CH₂-CH₂-; -CH₂-CH₂-CH₂-; -CH₂-CH₂-CH₂-CH₂-

   oder 2-Dimethylaminoethylmethacrylat
   und
d) 0,01 - 1 % eines Vernetzers oder einer Vernetzermischung
   und
e) 0 - 20 Gew.-% anderer radikalisch polymerisierbaren Monomeren. Als Komponente e) können beispielsweise (Meth)acrylsäure, N-Vinylimidazol, Itakonsäure, Maleinsäure, Fumarsäure oder α-Methylstyrol verwendet werden.

Die Mengen der Komponente a) - e) ergänzen sich zu 100 %.

Das erhaltene Copolymerpulver wird nach an sich bekannten Methoden zum Plastisol verarbeitet.

Solche vernetzende Monomere gemäß Komponente d) enthalten mehrere radikalisch polymerisierbare Einheiten in gleichem Molekül, wie beispielsweise (Meth)acrylsäureester mehrwertiger Alkohole. Genannt seinen z. B. Trimethylolpropan-tri(meth)acrylat, 1,4-Butandiol-dimethacrylat, 1,3-Butandioldimethacrylat, 1,6-Hexandioldimethacrylat und Allylmethacrylat.

### Herstellung

Die Herstellung der erfindungsgemäßen Polymere erfolgt nach an sich bekannten Methoden, wie beispielsweise der wäßrigen Emulsionspolymeriation bei Feststoffgehalten von ca. 50 % (Gew.-%) Die erfindungsgemäßen Copolymere können sowohl als Einstufenpolymerisate als auch als Mehrstufenprodukte hergestellt werden.

Mehrstufenpolymerisationsverfahren liefern Kern-Schale-Aufbau der entstehenden Teilchen, wobei die Schalen auch mehrfach vorkommen können, so daß der Kern von mehreren Hüllen unterschiedlicher Zusammensetzung umgeben sein kann.

### Beispiele

### Durchführung der Emulsionspolymerisation im Einstufenverfahren

### Einstufensystem:

Die Vorlage wurde auf 80 °C erhitzt. Anschließend wurde der Initiator (siehe Tabelle 1a, Seite 9, Punkt Vorlage) zugesetzt. Nach 5 Minuten Pause wurde der Zulauf 1, gleichmäßig innerhalb 240 min zudosiert. Nach Zulaufsende wurde die Dispersion 2 Stunden bei 80 °C nacherhitzt und ggf. mit Initiator (s. Konfektionierung u. Endpolymerisation) versetzt. Nach Abkühlung auf Raumtemperatur wurde die Dispersion konfektioniert. Nach dem Einstufenemulsionspolymerisationsverfahren wurden die Beispiele 1 und 2 hergestellt.

### Durchführung der Emulsionspolymerisation im Zweistufenverfahren

### Zweistufensystem:

Die Vorlage wurde auf 80 °C erhitzt. Anschließend wurde der Initiator (siehe Tabelle 1a, Seite 9, Punkt Vorlage) zugesetzt. Nach 5 Minuten Pause wurde der Zulauf 1, gleichmäßig innerhalb 90 min zugesetzt und anschließend Zulauf 2 innerhalb 90 min zudosiert. Nach Zulaufsende wurde 1 Stunde bei 80 °C nacherhitzt, anschließend auf 60 °C abgekühlt und Interox TBHP80, FeSO₄*7H₂O, gelöst in Wasser mit Ammoniak zugesetzt. Danach wurde Brüggolit C, in Wasser gelöst, innerhalb 30 Minuten zudosiert und anschließend weitere 30 Minuten nachgerührt. Nach Abkühlung auf Raumtemperatur wurde die Dispersion konfektioniert.

**Tabelle 1a**

| Einsatzstoffe der verschiedenen Beispiele | | | | | | |
|---|---|---|---|---|---|---|
| **Beispiel** | V 1 | V 2 | V 3 | 1 | 2 | 3 |
| Einheit | kg | kg | kg | kg | kg | kg |
| **Vorlage** | | | | | | |
| Wasser | 16 | 19 | 16 | 1185,5 | 16 | 16 |
| Sermul EA 205 | 0,0014 | | | 1,05 | | |
| Emulgator K30 | | 0,0037 | 0,012 | | 0,0031 2 | 0,012 |
| 4-Azobis-(4-cynovateriansäure)-Na-Salz | 0,02 | | | 15 | | |
| APS | | 0,0059 | 0,08 | | 0,005 | 0,08 |

| **Zulauf 1** | | | | | | |
|---|---|---|---|---|---|---|
| Wasser | 24,309 4 | 29,72 | 11,58 | 1638,3 | 24,23 | 11,58 |
| Sermul EA 205 | 0,22 | | | 165 | | |
| Emulgator K 30 | | 0,2328 | 0,094 | | 0,196 | 0,094 |
| 4-Azobis-(4-cynovaleriansäure)-Na-Salz | 0,04 | | | 30 | | |
| APS | | | 0,004 | | | 0,004 |
| MMA | 40 | 46,55 | 9,6 | 2847 | 37,16 | 9,6 |
| BMA | | | 10 | | | 9,98 |
| HEMA | -,- | -,- | -,- | 150 | 2 | |
| Allylmethacrylat | | | | 3 | 0,04 | 0,02 |
| Itakonsäure | | 0,95 | | | 0,8 | |
| N-Vinylimidazol | | | 0,4 | | | 0,4 |
| Ethylhexylthioglycolat | 0,028 | | | 2,1 | | |
| Palatinol N | | 0,95 | | | 0,8 | |

| **Zulauf 2** | | | | | | |
|---|---|---|---|---|---|---|
| Wasser | | | 11,58 | | | 11,58 |
| Emulgator K 30 | | | 0,094 | | | 0,094 |
| APS | | | 0,004 | | | 0,004 |
| MMA | | | 20 | | | 19 |
| HEMA | | | | | | 1 |
| Abkürzungen: MMA: Methylmethacrylat HEMA: Hydroyethylmethacrylat BMA: n-Butylmethacrylat APS: Ammoniumpersulfat Sermul EA 205: phosphorhaltiger Emulgator, Hersteller: Servo | | | | | | |

**Tabelle 1b**

| Einsatzstoffe der verschiedenen Beispiele | | | | | | |
|---|---|---|---|---|---|---|
| **Beispiel** | V 1 | V 2 | V 3 | 1 g | 2 kg | 3 kg |
| Einheit | kg | kg | kg | | | |
| **Konfektionierung u. Nachpolymerisation** | | | | | | |
| Agitan 218 | 0,01 | 0,019 | | 0,75 | 0,016 | |
| APS | | 0,0095 | | | 0,008 | |
| Formalinlösung, 35 %ig | | | 0,01 | 0,75 | | 0,01 |
| Wasser | | 0,5 | 1,1 | 10 | 0,8 | 1,1 |
| Interox TBHP80 | | | 0,02 | | | 0,02 |
| FeSO₄*7H₂O | | | 0,0004 | | | 0,0004 |
| Nitrilotriessigsäure | | | 0,0004 | | | 0,0004 |
| Ammoniak, 25 %ig | | | 0,002 | | | 0,002 |
| Brüggolit C | | | 0,02 | | | 0,02 |
| Nopco NXZ | | | 0,16 | | | 0,16 |
| Abkürzungen: MMA: Methylmethacrylat HEMA: Hydroyethylmethacrylat BMA: n-Butylmethacrylat APS: Ammoniumpersulfat Agitan 218: Entschäumungsmittel der Münzing Chemie GmbH Brüggolit C: Natriumformaldehydsulfoxylat der Fa. Brüggemann KG | | | | | | |

Nach dem Zweistufenemulsionspolymerisationverfahren wurden das Beispiel 3 hergestellt, Vergleichsbeispiele 1 und 2 wurden nach der Einstufenvorschrift hergestellt, Vergleichsbeispiel 3 nach der Zweistufenvorschrift.

Die nach allen Beispielvorschriften erhaltenen Dispersionen wurden anschließend, wie in EP 477 708 und EP 154 189 beschrieben, sprühgetrocknet.

### Herstellungsvorschrift für die Plastisol-Pasten aus dem Polymerpulver

Die ISO 11458 wurde als Grundlage für die Herstellung von Plastisolen zugrunde gelegt.

In einer Metalldose wird der Weichmacher vorgelegt und das zu prüfende Polymere zugewogen. Diese Probe wird unter einen Dissolver plaziert. Bei 2000 UpM wird das Plastisol 150 sec gerührt. Dann wird eine Pause eingelegt und noch nicht vollkommen eingerührtes Material, das sich an der Spindel, Becherinnenwand- und boden noch befindliche, mittels Spatel in diese Masse eingemischt. Es wird dann weitere 150 sec bei 2000 UpM gerührt. Wenn nötig, wird die Temperatur nach der Herstellung erfaßt. Ist sie zu hoch, müssen Rezepturänderungen vorgenommen werden. Zur Bestimmung der Viskosität des Plastisols wird die Evakuierung der Masse empfohlen.

### In Tabelle 2 sind die hergestellten Plastisolplasten aufgeführt.

**Tabelle 2**

| Rezepturen der einzelnen Plastisolpasten. Die aufgeführten Zahlen sind auf das Gewicht in Gramm bezogen | | | | | | |
|---|---|---|---|---|---|---|
| **PASTE** | **A** | **B** | **C** | **D** | **E** | **F** |
| Polymer | | | | | | |
| V1 | 160 | | | | | |
| V2 | | 160 | | | | |
| V3 | | | 200 | | | |
| 1 | | | | 160 | | |
| 2 | | | | | 160 | |
| 3 | | | | | | 200 |

| Weichmacher | | | | | | |
|---|---|---|---|---|---|---|
| Santicizer 261 | 240 | 240 | | 240 | 240 | |
| Palatinol AH | | | 200 | | | 200 |
| Sanitcizer 261 ist ein Weichmacher auf der Basis von Benzyloctylphthalat, der von der Fa. Solutia/B hergestellt wird. Palatinol AH ist ein Weichmacher auf der Basis von Di-2-ethylhexylphthalat, der von der Fa. BASF hergestellt wird. | | | | | | |

### Prüfung der Plastisolpasten

Die Plastisolpasten wurden bei 30 °C gelagert und nach bestimmten Zeitabschnitten auf ihre Viskosität hin untersucht (Haake Rotationsviskosimeter RVZ / Meßzelle SV2, Schergefälle: 57⁻¹). Wie man in Tabelle 3 gut erkennt (vergleiche Paste A mit D, B mit E und C mit F), zeigen die Plastisolpasten mit den modifizierten PAMA-Polymeren (Pasten D, E und F) eine deutlich niedrigere Viskosität und bessere Lagerstabilität.

**Tabelle 3**

| Viskosität verschiedener Plastisolpasten nach bestimmten Zeitabschnitten. Alle Zahlen besitzen die Einheit mPa · s; die Abkürzung 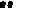 n.m." bedeutet 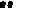 nicht meßbar" (aufgrund zu hoher Viskosität) | | | | | | |
|---|---|---|---|---|---|---|
| | **Pasten** | | | | | |
| **Zeit** | **A** | **B** | **C** | **D** | **E** | **F** |
| Anfangswert/sofort | 1566 | 2204 | 17400 | 1218 | 2088 | 8700 |
| 1 d | 3480 | 2494 | 12760 | 1392 | 2088 | 8120 |
| 7 d | n.m. | 3016 | 15080 | | 2378 | 8120 |
| 14 d | n.m. | 3364 | | 2088 | 3016 | |
| 21 d | n.m. | 4640 | | 3654 | | |
| 28 d | n.m. | 4524 | 37700 | n.m. | 3364 | 9280 |
| 35 d | n.m. | 4872 | | n.m. | 3306 | |
| 49 d | n.m. | 6960 | | n.m. | 3712 | |
| 56 d | | | n.m. | | | 59520 |

Aus den Werten der Tabelle 3 ist zu entnehmen, daß ein Plastisol mit der erfindungsgemäßen Zusammensetzung (Pasten D, E und F) deutlich bessere Viskositätswerte aufweist als ein Plastisol mit einer Zusammensetzung des Standes der Technik.
Weisen Pasten Viskositäten von mehr als 5000 mPa · s auf sind sie aus verarbeitungstechnischen Gründen nicht mehr praktikabel brauchbar.

### Herstellung der Plastisolfilme

Die Plastisolpasten wurden mit einem Filmziehrahmen (Spalthöhe 500 µm) auf ein Stahlblech aufgezogen. Zum Gelieren der Filme (innerhalb spätestens 30 min nach der Applikation) wurden die beschichteten Stahlbleche bei 180 °C 10 min im Ofen geliert.

### Prüfung der Plastisolfilme

Die Filme wurden optisch (s. Tabelle 4) beurteilt:

**Tabelle 4**

| Optische Beurteilung der Filme aus den verschiedenen Plastisolpasten. (Abkürzung k.A. = kein Ausschwimmen des Weichmachers) | | | | | | |
|---|---|---|---|---|---|---|
| **Paste** | **A** | **B** | **C** | **D** | **E** | **F** |
| Aussehen des Films | klar, k. A. | klar, k. A. | leicht trüb, k.A. | klar, k. A. | klar, k. A. | leicht trüb, k.A. |

## Patentansprüche

1. Copolymer, zur Herstellung eines Plastisols zusammengesetzt auf folgenden Monomerkomponenten:
a) 0 - 90 Gew.-% eines Acrylsäurealkylesters mit mindestens 3 und/oder eines Methacrylsäurealkylesters mit mindestens 2 Kohlenstoffatomen im Alkylrest und/oder Styrol
und
b) 10 - 99 Gew.-% Methylacrylat oder -methacrylat, Ethylacrylat.
c) 1-20 Gew.-% einer hydrophilen Verbindung der Formel III 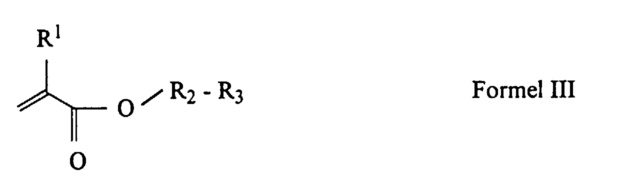
R₁ =CH₃, H
R₂ = -CH₂-; -(CH₂)-ₙ
n = 2, 3 oder 4,
wobei die Alkylgruppe auch verzweigt sein kann, wie beispielsweise Iso-Propyl oder Iso-Butyl
R₃ = OH, NH₂, -N( R₄)₂
R₄ = H, CH₃, CH₂ - CH₃
und
d) 0,01 - 1 % eines Vernetzers oder einer Vernetzermischung
und
e) 0 - 20 Gew.-% anderer radikalisch polymerisierbaren Monomeren wobei sich die relativen Mengen der Komponenten a) - e) zu 100 % ergänzen.

2. Polymer, erhältlich durch ein Einstufenpolymerisationsverfahren der Komponenten Komponenten a) - e) gemäß Anspruch 1.

3. Polymer, erhältlich durch ein Mehrstufenpolymerisationsverfahren, der Komponente a) - e) gemäß Ansprch 1.

4. Plastisol, erhältlich aus einem Polymer nach Anspruch 1 oder Anspruch 2 oder 3.

5. Verwendung des Polymers, erhältlich nach Anspruch 1, zur Herstellung eines Plastisols.

6. Verwendung des Polymers, erhältlich nach Anspruch 2, zur Herstellung eines Plastisols.

7. Verwendung des Polymers, erhältlich nach Anspruch 3, zur Herstellung eines Plastisols.
